# EUROPEAN PATENT APPLICATION

(11) **EP 4 507 093 A1**
(43) Date of publication of application: **12.02.2025**
(21) Application number: 23784288.5
(22) Date of filing: 04.04.2023
(51) Int. Cl.: H01M 50/242, H01M 50/249, H01M 50/264, H01M 50/244

(54) **SWAPPABLE BATTERY SYSTEM AND NEW ENERGY VEHICLE**

(30) Priority: 07.04.2022 CN 202220801187 U
(71) Applicant: Sichuan Zhili Intelligent Energy Technology Co., Ltd., Yibin, Sichuan 644005 (CN)
(72) Inventor: LI, Liguo, Yibin, Sichuan 644005 (CN); HONG, Munan, Yibin, Sichuan 644005 (CN)
(74) Representative: Studio Torta S.p.A.
(86) International application number: PCT/CN2023/086293
(87) International publication number: WO 2023/193725

(57) **Abstract**

The present invention relates to the technical field of new energy vehicle battery processing, and in particular, to a swappable battery system and a new energy vehicle. The swappable battery system includes a battery frame, a locking seat, a locking assembly, and a first elastic member. The battery frame is used for installing and carrying a battery pack, the battery frame is provided on the locking seat, the locking assembly is used for pressing the battery frame onto the locking seat, and the first elastic member is provided between the locking seat and the battery frame. The swappable battery system, by deformation of the first elastic member, absorbs vibration of the battery frame caused by vibration of the new energy vehicle, and reduces rigid collision between the battery frame and the locking seat; moreover, a pressing head of the locking assembly is kept in a pressing state, thereby being beneficial to reducing the requirements for rigidity and strength of the battery frame, reducing the cost of the battery frame, and being beneficial to reducing the impact of vibration on the battery pack, improving the safety performance of the battery pack. The new energy vehicle provides buffering for vertical vibration of the battery frame, reducing the cost of the battery frame.

## Description

The present invention claims the priority of the Chinese patent application with application no. 202220801187.5, filed to the China National Intellectual Property Administration on 07 April 2022, and entitled "Swappable Battery System and New Energy Vehicle".

### Technical Field

The present invention relates to the technical field of new energy battery processing, and in particular, to a swappable battery system and a new energy vehicle.

### Background

With the development of new energy technologies, new energy batteries are used more and more widely, and people have increasingly higher requirements for the installation and cost of new energy batteries.

In the related art, a new energy battery is arranged on a new energy vehicle by a battery frame, the battery frame is directly and rigidly connected with a locking seat by metal; there is no buffering structure between the battery frame and the locking seat, and the battery frame requires for high rigidity and strength, increasing the cost and reducing the safety performance.

In order to solve the described problem, there is an urgent need to provide a swappable battery system and a new energy vehicle.

### Summary

One object of the present invention is to provide a swappable battery system, for achieving the effects of providing buffering for a vibration process of a battery frame and reducing the cost.

Another object of the present invention is to provide a new energy vehicle, for achieving the effects of providing buffering for a vibration process of a battery frame and reducing the cost by the swappable battery system.

To achieve the objects, the present invention adopts the following technical solutions: a swappable battery system, including: a battery frame, configured to install and carry a battery pack; a locking seat, the battery frame being provided on the locking seat; a locking assembly, configured to press the battery frame onto the locking seat; and a first elastic member, provided between the locking seat and the battery frame.

As an optional solution, the swappable battery system further includes: a second elastic member, provided on a driving force transmission path of the locking assembly.

As an optional solution, the second elastic member is a spring or a cylinder, and when the locking assembly is in a pressing state, the spring or the cylinder can absorb displacement transmitted by the locking assembly.

As an optional solution, the swappable battery system further includes: a locking block, provided on the battery frame, the locking block being located between a pressing head of the locking assembly and the battery frame, so as to transmit a pressure of the pressing head to the battery frame.

As an optional solution, the swappable battery system further includes: a third elastic member, provided between the battery frame and the locking block.

As an optional solution, the locking assembly includes: a driving member; a transmission mechanism, provided at an output end of the driving member; and a pressing head, provided at an end, away from the driving member, of the transmission mechanism, the driving member being capable of driving the pressing head to press the battery frame by the transmission mechanism.

As an optional solution, the transmission mechanism is a multi-bar linkage assembly.

As an optional solution, the first elastic member is a rubber block.

As an optional solution, the swappable battery system further includes: a battery swapping base, configured to fix the locking seat and the locking assembly.

As an optional solution, there are a plurality of locking assemblies.

A new energy vehicle, including the swappable battery system.

The beneficial effects of the present invention are as follows: the present invention provides a swappable battery system, and the swappable battery system includes the battery frame, the locking seat, the locking assembly, and the first elastic member. The battery frame is configured to install and carry a battery pack, the battery frame is provided on the locking seat, the locking assembly is used for pressing the battery frame onto the locking seat, and the first elastic member is provided between the locking seat and the battery frame. The swappable battery system, by the first elastic member, absorbs vibration of the battery frame caused by vibration of a new energy vehicle, and reduces rigid collision between the battery frame and the locking seat, thereby being beneficial to reducing the requirements for rigidity and strength of the battery frame, reducing the cost of the battery frame, and being beneficial to reducing the impact of vibration on the battery pack, improving the safety performance of the battery pack.

The present invention also provides a new energy vehicle. By being loaded with the swappable battery system, the new energy vehicle provides buffering for vertical vibration of the battery frame, reducing the cost of the battery frame.

### Brief Description of the Drawings

The drawings constituting a part of the invention are intended to provide better understanding of the present invention, and the schematic embodiments of the present invention and the description thereof are used to explain the present invention, but not to limit the present invention improperly. In the drawings:

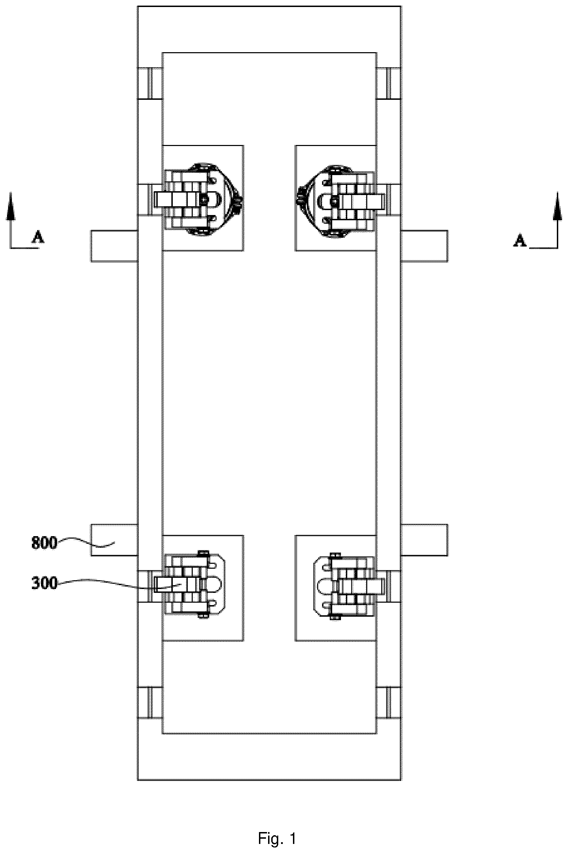

Fig. 1 is a structural schematic diagram of a swappable battery system according to an embodiment of the present invention;

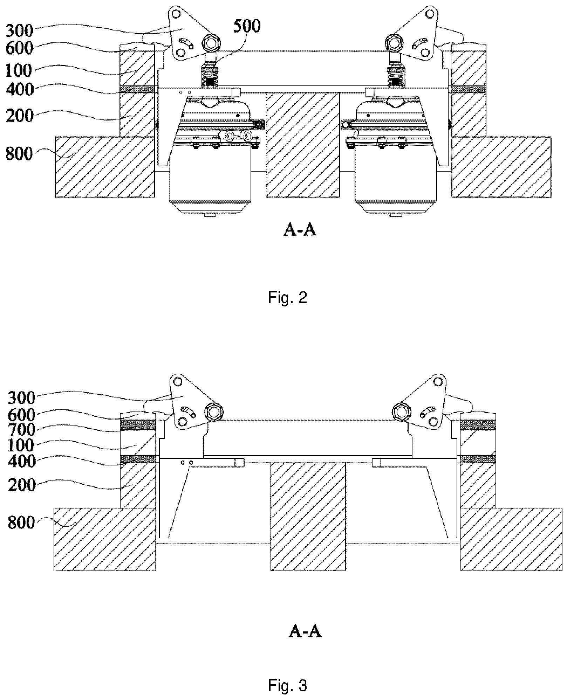

Fig. 2 is a schematic diagram of the cross-section view structure at A-A in first embodiment of the present invention; and
Fig. 3 is a schematic diagram of the cross-section view structure at A-A in second embodiment of the present invention.

The drawings contain the following reference signs:
100: battery frame; 200: locking seat; 300: locking assembly; 400: first elastic member; 500: second elastic member; 600: locking block; 700: third elastic member; 800: battery swapping base.

### Detailed Description of the Embodiments

The technical solutions in the embodiments of the present invention will be described clearly and completely with reference to the drawings in the embodiments of the present invention. Apparently, the described embodiments are merely some rather than all of the embodiments of the present invention. The following description of at least one exemplary first embodiments merely illustrative in nature and is in no way intended to limit the present invention and any application or use thereof. All other embodiments obtained by a person skilled in the art on the basis of the embodiments of the present invention without creative efforts shall belong to the scope of protection of the present invention.

### First embodiment:

With the development of new energy technologies, new energy batteries are used more and more widely, and people have increasingly higher requirements for the installation and cost of new energy batteries.

The present embodiment provides a new energy vehicle. The new energy vehicle is loaded with a new energy battery to operate, effectively saving energy, and since the cost consumed by charging is far less than fuel cost, the new energy vehicle is beneficial to reducing the operating cost of a user.

In the related art, a new energy battery is arranged on a new energy vehicle by a battery frame, the battery frame is directly and rigidly connected with a locking seat by metal; there is no buffering structure between the battery frame and the locking seat, and the battery frame requires for high rigidity and strength, increasing the cost and reducing the safety performance.

In order to solve the described problem, the present embodiment provides a swappable battery system. The swappable battery system includes a battery frame 100, a locking seat 200, a locking assembly 300, and a first elastic member 400. The battery frame 100 is used for installing and carrying a battery pack; the battery frame 100 is provided on the locking seat 200; the locking assembly 300 is used for elastically pressing the battery frame 100 onto the locking seat 200; and the first elastic member 400 is provided between the locking seat 200 and the battery frame 100. The swappable battery system absorbs vibration of the battery frame 100 caused by vibration of the new energy vehicle by the first elastic member 400, and reduces rigid collision between the battery frame 100 and the locking seat 200, being beneficial to reducing the requirements for rigidity and strength of the battery frame 100, reducing the cost of the battery frame 100, and being beneficial to reducing the impact of vibration on the battery pack, improving the safety performance of the battery pack.

As an optional solution, the swappable battery system further includes a locking block 600; the locking block 600 is provided on the battery frame 100; and the locking block 600 is located between a pressing head of the locking assembly 300 and the battery frame 100, so as to transmit a pressure of the pressing head to the battery frame 100, thereby improving the stability of securing of the battery frame 100.

The elastically pressing means that when the system is working, the first elastic member 400 is in a compressed state under the effect of the gravity of the battery frame 100. When the new energy vehicle jolts and causes the battery frame 100 to move upwards due to inertia, the acting force of springing back of the first elastic member 400 acts on the battery frame 100 to provide support for the battery frame 100, such that the whole battery frame 100 moves upwards, and the acting force acts on the locking block 600 on the battery frame 100, avoiding separation of the battery frame 100 and the locking block 600, which causes rigid collision.

As an optional solution, the first elastic member 400 can be a rubber block; the rubber block has certain elasticity and strength, and the rubber block is arranged between the locking seat 200 and the battery frame 100, thus providing a certain supporting effect for the battery frame 100, and also providing buffering for vibration of the battery frame 100. Moreover, the rubber block is a conventional material, and is easy to purchase and has low cost.

Optionally, the locking assembly 300 includes a driving member, a transmission mechanism, and the pressing head. The transmission mechanism is arranged at an output end of the driving member, the pressing head is arranged at an end, away from the driving member, of the transmission mechanism, and the driving member can drive the pressing head to press the battery frame 100 by the transmission mechanism, such that the battery frame 100 can be pressed and secured, avoiding movement of the battery frame 100 during running of the vehicle.

Optionally, the transmission mechanism is a multi-bar linkage assembly; the output force of the locking assembly 300 is amplified by the multi-bar linkage assembly, being beneficial to improving the stability of securing of the battery frame 100 by the locking assembly 300.

As an optional solution, the swappable battery system further includes a second elastic member 500, and the second elastic member 500 is provided on a driving force transmission path of the locking assembly 300. During a process in which the new energy vehicle jolts and causes the battery frame 100 to vibrate, the battery frame 100 moves upwards due to an upward inertial force, and the second elastic member 500 of the swappable battery system is compressed at this time; and when the battery frame 100 moves downwards due to an inertial force, the second elastic member 500 springs back, and the swappable battery system springs back to press the locking block 600 downwards. In a whole vibration process, the elastic effect of the first elastic member 400 and the second elastic member 500 provides buffering for vibration of the battery frame 100, achieving contact between the battery frame 100 and the locking assembly 300 and avoiding separation, achieving buffering for the battery frame 100, and avoiding collision between the battery frame 100 and the locking assembly 300.

Further, the second elastic member 500 can be a spring; and when the locking assembly 300 is in a pressing state, the spring can absorb displacement transmitted by the locking assembly 300, thereby achieving the purpose of providing buffering for vibration of the new energy vehicle. Specifically, the spring is arranged in a vertical direction at the end, away from the locking seat 200, of the locking assembly 300, and the spring is sleeved on the driving member of the locking assembly 300. During a process in which the new energy vehicle jolts and causes the battery frame 100 to vibrate, the battery frame 100 moves upwards due to an upward inertial force, the spring is compressed at this time, and the spring provides an upward reaction force for the locking assembly 300. It can be understood that the disposal state of the spring is a compressed state or an initial state. The spring is a conventional elastic member, and is easy to purchase and has low cost. Moreover, an operator can select a spring having a corresponding elastic coefficient according to the vibration situation of the battery frame 100, which is beneficial to further improving the safety performance of the swappable battery system.

Moreover, the second elastic member 500 can also be a cylinder. When the locking assembly 300 is in a pressing state, the cylinder can absorb displacement transmitted by the locking assembly 300, thereby achieving the purpose of providing buffering for vibration of the new energy vehicle. Specifically, during a process in which the new energy vehicle jolts and causes the battery frame 100 to vibrate, the battery frame 100 moves upwards due to an upward inertial force, and the cylinder is compressed at this time; the internal air pressure is adjusted by the cylinder, such that the cylinder provides an upward reaction force for the locking assembly 300, achieving the purpose of buffering. In this case, the cylinder can provide a driving force for pressing the battery frame 100, and also has a buffering effect.

In addition, the second elastic member 500 is a spring built in the cylinder, and the spring absorbs displacement transmitted by the locking assembly 300, achieving the purpose of providing buffering for vibration of the new energy vehicle.

Optionally, the swappable battery system further includes a battery swapping base 800; the battery swapping base 800 is used for fixing the locking seat 200 and the locking assembly 300, so as to provide support for the locking seat 200 and the locking assembly 300, and allowing the swappable battery system to be modularized, so as to facilitate assembly and maintenance by an operator.

It can be understood that there are a plurality of locking assemblies 300, and the plurality of locking assemblies 300 are arranged at intervals in a circumferential direction of the battery frame 100, thereby improving the safety and stability of securing of the battery frame 100 by the locking assemblies 300.

### Second embodiment:

Second embodiment provides a swappable battery system. The main structure of the swappable battery system is the same as that in first embodiment. To avoid repetition, the present embodiment only describes the difference from first embodiment.

In the present embodiment, the swappable battery system is not provided with the second elastic member 500, but the swappable battery system further includes a third elastic member 700, and the third elastic member 700 is provided between the battery frame 100 and the locking block 600. During vibration of the battery frame 100, when the battery frame 100 has an upward inertial force, since the third elastic member 700 is provided between the locking block 600 and the locking assembly 300, at this time, the third elastic member 700 is compressed, and the first elastic member 400 springs back. When the new energy vehicle jolts and causes the battery frame 100 to vibrate, the battery frame 100 reciprocates up and down. When the battery frame 100 moves upwards, the third elastic member 700 is compressed by a force, and the first elastic member 400 springs back, thereby ensuring that the battery frame 100 and the locking block 600 are always in a contact state, and avoiding rigid collision between the battery frame 100 and the locking block 600. When the battery frame 100 moves downwards, the third elastic member 700 springs back, and the first elastic member 400 is compressed, and thus the swappable battery system can still ensure that the battery frame 100 and the locking block 600 are always in a contact state, avoiding rigid collision between the battery frame 100 and the locking block 600. In a whole vibration process of the swappable battery system, by compression and springing back of the first elastic member 400 and the second elastic member 500, the swappable battery system can be in floating contact with the locking block 600 without being separated from the locking block, achieving buffering for the swappable battery system, and avoiding impact and collision.

Note that the basic principle and main features of the present invention and advantages of the present invention are shown and described above. It should be understood by a person skilled in the art that the present invention is not limited to the described embodiments. The described embodiments and the description merely describe the principle of the present invention. Various changes and modifications can be made without departing from the spirit and scope of the present invention, and all these changes and modifications fall within the scope of protection of the present invention. The scope of protection of the present invention is defined by the appended claims and equivalents thereof.

## Claims

1. A swappable battery system, comprising:
a battery frame (100), configured to install and carry a battery pack;
a locking seat (200), the battery frame (100) being provided on the locking seat (200);
a locking assembly (300), configured to elastically press the battery frame (100) onto the locking seat (200); and
a first elastic member (400), provided between the locking seat (200) and the battery frame (100).

2. The swappable battery system according to claim 1, wherein the swappable battery system further comprises:
a second elastic member (500), provided on a driving force transmission path of the locking assembly (300).

3. The swappable battery system according to claim 2, wherein the second elastic member (500) is a spring or a cylinder, and when the locking assembly (300) is in a pressing state, the spring or the cylinder can absorb displacement transmitted by a pressing head of the locking assembly (300) during vibration.

4. The swappable battery system according to claim 1, wherein the swappable battery system further comprises:
a locking block (600), provided on the battery frame (100), the locking block (600) being located between a pressing head of the locking assembly (300) and the battery frame (100) so as to transmit a pressure of the pressing head to the battery frame (100).

5. The swappable battery system according to claim 4, wherein the swappable battery system further comprises:
a third elastic member (700), provided between the battery frame (100) and the locking block (600).

6. The swappable battery system according to any one of claims 1 to 5, wherein the locking assembly (300) comprises:
a driving member, used for providing an initial driving force;
a transmission mechanism, provided at an output end of the driving member; and
a pressing head, provided at an end, away from the driving member, of the transmission mechanism, the driving member being capable of driving the pressing head to press the battery frame (100) by the transmission mechanism.

7. The swappable battery system according to claim 6, wherein the transmission mechanism is a multi-bar linkage assembly.

8. The swappable battery system according to any one of claims 1 to 5, wherein the first elastic member (400) is a rubber block.

9. The swappable battery system according to any one of claims 1 to 5, wherein there are a plurality of locking assemblies (300).

10. A new energy vehicle, comprising the swappable battery system according to any one of claims 1 to 9.
